**Europäisches Patentamt**

**European Patent Office**

**Office européen des brevets**

(19)

(11) Veröffentlichungsnummer: **0 061 619**
**B1**

# (12) EUROPÄISCHE PATENTSCHRIFT

(45) Veröffentlichungstag der Patentschrift:
**11.06.86**

(21) Anmeldenummer: **82101938.7**

(22) Anmeldetag: **11.03.82**

(51) Int. Cl.⁴: **B 29 C 45/26,** B 29 C 33/00,
B 29 D 11/00

(54) Formwerkzeug zur Herstellung von Teilen aus thermoplastischem Material.

(30) Priorität: **31.03.81 DE 3112751**

(43) Veröffentlichungstag der Anmeldung:
**06.10.82 Patentblatt 82/40**

(45) Bekanntmachung des Hinweises auf die Patenterteilung:
**11.06.86 Patentblatt 86/24**

(84) Benannte Vertragsstaaten:
**AT CH DE FR GB IT LI NL SE**

(56) Entgegenhaltungen:
**FR - A - 1 243 727**
**FR - A - 2 170 220**
**FR - A - 2 249 755**
**GB - A - 650 692**

(73) Patentinhaber: **Firma Carl Zeiss, D-7920 Heidenheim (Brenz) (DE)**

(72) Erfinder: **Kreuttner, Albert, Dipl.-Ing.,
Bischof-Fischer-Strasse 110, D-7080 Aalen (DE)**

EP 0 061 619 B1

## Beschreibung

Die vorliegende Erfindung betrifft ein Formwerkzeug zur Herstellung von Teilen aus thermoplastischem Material, bestehend aus zwei jeweils als Träger für einen Stempeleinsatz ausgebildeten Stempeln, wobei die einander zugewandten Flächen dieser Stempeleinsätze die Form des herzustellenden Teiles bestimmen.

Solche Werkzeuge sind aus der FR-A-2.170.220 bekannt und finden Anwendung zur Herstellung von Teilen nach einem Gieß- oder nach dem Spritzgießverfahren. Das letztere bietet sich besonders an, da es die Erreichung von extrem niedrigen Zykluszeiten und damit einer hohen Kosteneffektivität erlaubt. Außerdem ermöglicht das Spritzgießverfahren eine drastische Reduzierung des kapitalintensiven Werkzeugaufwandes durch die Verwendung sogenannter Stammformen.

Eine solche Stammform besteht aus zwei Stempeln, die beim Gießvorgang durch den Maschinenschliendruck zusammengepreßt werden. Jeder Stempel ist mit einem Stempeleinsatz ausgerüstet, wobei die einander zugewandten Flächen dieser Stempeleinsätze die Form des herzustellenden Teiles bestimmen. Die Stempeleinsätze sind dabei formschlüssig mit dem jeweiligen Stempel verbunden. Soll ein anderes Teil hergestellt werden, so werden die Stempeleinsätze ausgewechselt.

Dieser Auswechselvorgang ist, bedingt durch die formschlüssige Verbindung zwischen Stempel und Stempeleinsatz sehr zeitintensiv. Wechselzeiten von mehreren Stunden Dauer werden noch als normal angesehen.

Es ist die Aufgabe der vorliegenden Erfindung ein Formwerkzeug zu schaffen, das einen schnellen und problemlosen Wechsel der Stempeleinsätze ermöglicht.

Diese Aufgabe wird bei einem Formwerkzeug nach dem Oberbegriff des Anspruchs 1 dadurch gelöst, daß die dem Stempel zugewandte Fläche jedes Stempeleinsatzes und die zur Aufnahme dieses Stempeleinsatzes dienende Fläche des Stempels jeweils als polierte Kugelfläche mit demselben Radius ausgebildet sind.

Es ist dabei vorteilhaft, die Kugelflächen der Stempel und der Stempeleinsätze als Normradienflächen auszubilden. Diese Kugelflächen sind für alle Stempeleinsätze identisch, unabhängig von der Gestalt der Flächen, die das Innere der Form bestimmen. Damit ist jeder Stempeleinsatz jederzeit einfach und schnell gegen einen anderen Stempeleinsatz auswechselbar.

Um das Auswechseln der Stempeleinsätze zu erleichtern sind besonders vorteilhaft die Kugelflächen der Stempel und der Stempeleinsätze so fein poliert, daß die Stempeleinsätze durch das sogenannte, aus dem Eichen mit Endmassen bekannte "Ansprengen" in den zugeordneten Stempeln haften.

Eine andere zweckmäßige Ausbildung sieht vor, die Kugelflächen der Stempel mit einer Öffnung zum Anschluß an eine Unterdruckleitung zu versehen. Der notwendige Unterdruck kann bei Spritzgußmaschinen direkt aus vorhandenen Leitungen entnommen werden. Da die einander zugewandten Flächen von Stempel und Stempeleinsatz denselben Radius haben, genügt schon ein verhältnismäßig geringer Unterdruck zur sicheren Lagerung des Stempeleinsatzes im Stempel.

Es gibt Anwendungsfälle, bei denen ein bestimmter Stempeleinsatz oder eine Serie solcher Stempeleinsätze einem bestimmten Stempel zugeordnet sein muß. In diesem Fall ist es vorteilhaft der Kugelfläche eines Stempels einen anderen Radius zu geben als der Kugelfläche des anderen Stempels.

Als Materialien für die Stempeleinsätze kommen je nach Art des zu vergießenden Materials beispielsweise Stahl, Spezialglas, Glaskeramik oder auch Saphir in Frage. Saphir findet besonders vorteilhafte Anwendung in Zusammenhang mit verschiedenen transparenten Kunststoffen, da er eine leichte Trennung zwischen Form und Gußteil gewährleistet.

Das Formwerkzeug nach der Erfindung findet ganz besonders vorteilhaft Verwendung zur Herstellung von Brillenlinsen. Hier kommt es sehr auf eine schnelle Auswechselbarkeit der Stempeleinsätze an, da mit ein- und derselben Anlage Linsen verschiedener optischer Wirkungen hergestellt werden müssen.

Einen sehr wesentlichen Vorteil bietet das Formwerkzeug nach der Erfindung bei der Herstellung von Brillenlinsen dadurch, daß durch Drehen der Stempeleinsätze in vorgegebene Positionen praktisch alle torischen Linsen einfach und ohne Stempeleinsatzwechsel gefertigt werden können.

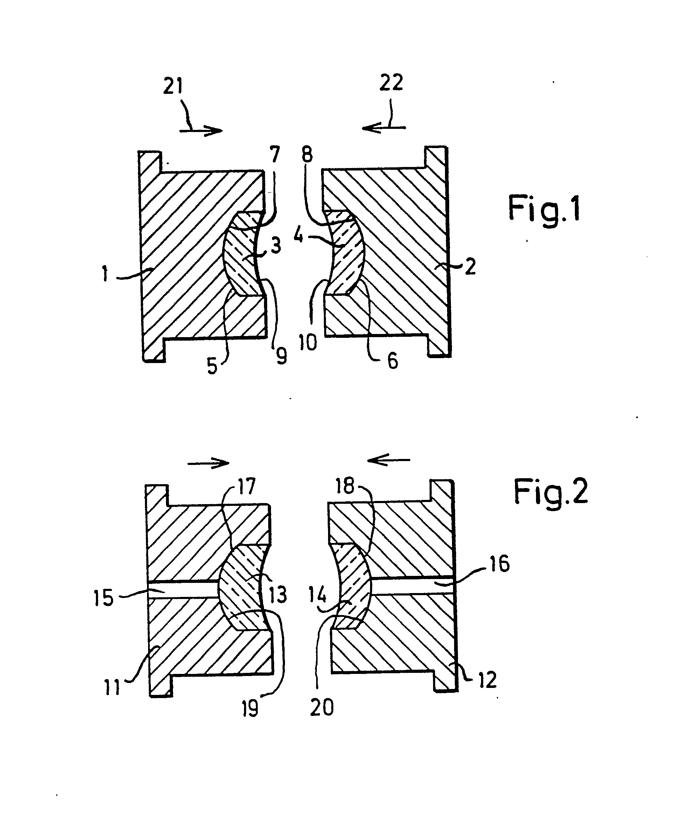

Die Erfindung wird im folgenden anhand der Figuren 1 und 2 der beigefügten Zeichnungen näher erläutert. Es zeigen:

Fig. 1 einen Schnitt durch ein Ausführungsbeispiel des Formwerkzeugs;

Fig. 2 einen Schnitt durch ein anderes Ausführungsbeispiel.

In Fig. 1 sind mit 1 und 2 die Stempel eines Formwerkzeugs bezeichnet, in welchem die Stempeleinsätze 3 und 4 gehaltert sind. Die zur Aufnahme dieser Stempeleinsätze dienenden Flächen 5 und 6 der Stempel 1 und 2 sind als polierte Kugelflächen mit dem Radius $R_N$ ausgebildet. Die entsprechenden Flächen 7 und 8 der Stempeleinsätze 3 und 4 sind ebenfalls als polierte Kugelflächen mit dem Radius $R_N$ ausgebildet. Der Radius $R_N$ ist als Normradius gewählt.

Die Stempeleinsätze 3 und 4 sind auswechselbar gegen andere Stempeleinsätze deren Einsatzflächen ebenfalls als polierte Kugelflächen mit dem Normradius $R_N$ ausgebildet sind und zwar unabhängig von der Form und Gestalt der das Forminnere bestimmenden Flächen 9 und 10.

Die Kugelflächen 5,7 und 6,8 sind so fein poliert, daß die Stempeleinsätze 3 und 4 durch Ansprengen in den Stempeln 1 und 2 haften.

Zum Gießen des Teiles werden die Stempel 1 und 2 durch den Maschinenschließdruck in Richtung der Pfeile 21,22 zusammengefahren und in den von den Flächen 9 und 10 gebildeten Raum wird das thermoplastische Material unter hohem Druck eingespritzt.

Besonders vorteilhaft können mit dem dargestellten Formwerkzeug Brillenlinsen aus thermoplastischem Material, wie es z.B. unter der Bezeichnung PMMA, PC usw. bekannt ist, hergestellt werden. Dabei ist es beispielsweise möglich nach Herstellung van 1000 Brillenlinsen einer optischen Wirkung von +1,5 dpt durch einfachen und schnellen Wechsel der 3,4 gegen solche mit anderen Flächen 9, 10, 1000 oder mehr Brillenlinsen mit +2,5 dpt zu erzeugen usw.

Die Zeit, die zum Wechseln der Stempeleinsatz 3 und 4 benötigt wird, liegt bei dem Formwerkzeug nach der Erfindung im Minutenbereich.

Zur Erzeugung torischer Brillenlinsen, d.h. von Brillenlinsen mit astigmatischer Wirkung wählt man einen Stempeleinsatz, dessen Fläche 9 einen Torus darstellt, der dem gewünschten Korrekturwert für den Astigmatismus entspricht. Es ist dann möglich durch Drehen dieses Stempeleinsatzes den Achsen des Torus eine gewünschte Loge zu geben. Dies ist notwendig, wenn auch die andere Fläche der Brillenlinse eine nicht-sphärische Gestalt hat, beispieisweise als Gleitsichtfläche ausgebildet ist.

Im Ausführungsbeispiel der Figur 2 sind die Stempel 11 und 12 mit Bohrungen 15 und 16 versehen, die an eine Unterdruckleitung angeschlossen sind. Durch den so erzeugten Unterdruck werden die Stempeleinsätze 13, 14 gehalten.

Im dargestellten Beispiel haben die Kugelflächen 17,19 der Teile 11,13 einen anderen Radius als die Kugelflächen 18,20 der Teile 12,14. Dies kann beispielsweise erforderlich sein um torische Flächen oder Gleitsichtflächen stets auf eine vorbestimmte Seite einer Brillenlinse aufzubringen.

## Patentansprüche

1. Formwerkzeug zur Herstellung von Teilen aus thermoplastischem Material, bestehend aus zwei jeweils als Träger für einen Stempeleinsatz (3, 4; 13, 14) ausgebildeten Stempeln (1, 2; 11, 12), wobei die einander zugewandten Flächen dieser Stempeleinsätze die Form des herzustellenden Teiles bestimmen, dadurch gekennzeichnet, daß die dem Stempel (1, 2; 11, 12) zugewandte Fläche (7, 8; 19, 20) jedes Stempeleinsatzes (3, 4; 13, 14) und die zur Aufnahme dieses Stempeleinsatzes (3, 4; 13, 14) dienende Fläche (5, 6; 17, 18), des Stempels (1, 2; 11, 12) jeweils als polierte Kugelfläche mit demselben Radius ausgebildet sind.

2. Formwerkzeug noch Anspruch 1, dadurch gekennzeichnet, daß die Kugelflächen (5, 6 bzw. 7, 8; 17, 18 bzw. 19,20) der Stempel (1, 2; 11, 12) und der Stempeleinsätze (3, 4; 13, 14) als Normradienflächen ausgebildet sind.

3. Formwerkzeug nach Anspruch 1 und 2, dadurch gekennzeichnet, daß Kugelflächen (5, 6 bzw. 7, 8; 17, 18 bzw. 19, 20) der Stempel (1, 2; 11, 12) und der Stempeleinsätze (3, 4; 13, 14) so fein poliert sind, daß die Stempeleinsätze (3, 4; 13, 14) durch Ansprengen in den zugeordneten Stempeln (1, 2; 11, 12) haften.

4. Formwerkzeug nach Anspruch 1 bis 3, dadurch gekennzeichnet, daß Kugelflächen (17, 18) der Stempel (11, 12) mit einer Öffnung (15, 16) zum Anschluß an eine Unterdruckleitung versehen sind.

5. Formwerkzeug noch Anspruch 1 bis 4, dadurch gekennzeichnet, daß die Kugelfläche (17) eines Stempels (11) einen anderen Radius aufweist als die Kugelfläche (18) des anderen Stempels (12).

6. Formwerkzeug nach Anspruch 1 und einem oder mehreren der folgenden, dadurch gekennzeichnet, doß die Stempeleinsätze (3, 4; 13, 14) aus Saphir bestehen.

7. Formwerkzeug nach Anspruch 1 und einem oder mehreren der folgenden, gekennzeichnet durch seine Verwendung in Spritzgußanlagen.

8. Formwerkzeug nach Anspruch 1 und einem oder mehreren der folgenden, gekennzeichnet durch seine Verwendung zur Herstellung von Brillenlinsen.

9. Formwerkzeug nach Anspruch 1 und einem oder mehreren der folgenden, gekennzeichnet durch seine Verwendung zur Herstellung von Brillenlinsen in Spritzgußanlagen.

## Revendications

1. Moule pour la fabrication de pièces en matière thermoplastique, constitué de deux poinçons (1, 2; 11, 12) servant chacun de support pour une pièce insérée ou garniture de poinçon (3, 4; 13, 14), les faces tournées l'une vers l'autre des garnitures de poinçon (3, 4; 13, 14) déterminant la forme de la pièce à fabriquer, caractérisé en ce que la surface (7, 8; 19, 20) tournée vers le poinçon (1, 2; 13, 14) de chaque garniture (3, 4; 13, 14) et la surface (5, 6; 17, 18) du poinçon (1, 2; 11, 12) servant à recevoir cette garniture (3, 4; 13, 14) sont réalisées chacune comme une surface sphérique polie de même rayon.

2. Moule selon la revendication 1, caractérisé en ce que les surfaces sphériques (5, 6 respectivement 7, 8; 17, 18 respectivement 19, 20) des poinçons (1, 1; 11, 12) et des garnitures (3, 4; 13, 14) sont réalisées comme des surfaces à rayon standardise.

3. Moule selon les revendications 1 et 2, caractérisé en ce que les surfaces sphériques (5, 6 respectivement 7, 8; 17, 18 respectivement 19, 20) des poinçons (1, 2; 11, 12) et des garnitures (3, 4; 13, 14) possèdent un poli si fin que les garnitures (3, 4; 13, 14) adhèrent par accolement dans les poinçons (1, 2; 11, 12).

4. Moule selon les revendications 1 à 3, caractérisé en ce que les surfaces sphériques (17, 18) des poinçons (11, 12) sont pourvues d'un orifice (15, 16) pour le raccordement à une conduite à dépression.

5. Moule selon les revendications 1 à 4, caractérisé en ce que la surface sphérique (17) d'un poinçon (11) possède un autre rayon que la surface sphérique (18) de l'autre poinçon (12).

6. Moule selon la revendication 1 et une ou plusieurs des revendications suivantes, caractérisé en ce que les garnitures (3, 4; 13, 14) sont en saphir.

7. Moule selon la revendication 1 et une ou plusieurs des revendications suivantes, caractérisé par son utilisation dans des installations de moulage par injection.

8. Moule selon la revendication 1 et une ou plusieurs des revendications suivantes, caractérisé par son utilisation pour la fabrication de lentilles de lunettes.

9. Moule selon la revendication 1 et une ou plusieurs des revendications suivantes, caractérisé par son utilisation pour la fabrication de lentilles de lunettes dans des installations de moulage par injection.

**Claims**

1. Mould for the manufacture of pieces of thermoplastic material, consisting of two die elements (1, 2; 11, 12) each of which is developed as support for a die-insert plug (3, 4; 13, 14), the facing surfaces of said die-insert plugs determining the shape of the part to be produced, characterized in that the surface (7, 8; 19, 20) of each die-insert plug (3, 4; 13, 14) which faces the die element (1, 2; 11, 12) and the surface (5, 6; 17, 18) of the die element (1, 2; 11, 12) which serves to receive said die-insert plug (3, 4; 13, 14) are both developed as polished spherical surfaces of the same radius.

2. Mould according to claim 1, characterized in that the spherical surfaces (5, 6 and 7, 8; 17, 18 and 19, 20) of the die elements (1, 2; 11, 12) and of the die-insert plugs (3, 4; 13, 14) are developed as surfaces of standardized radius.

3. Mould according to claims 1 and 2, characterized in that the spherical surfaces (5, 6 and 7, 8; 17, 18 and 19,20) of the die elements (1, 2; 11, 12) and of the die-insert plugs (3, 4; 13, 14) are so finely polished that the die-insert plugs (3, 4; 13, 14) adhere by wringing in the associated die elements (1, 2; 11, 12).

4. Mould according to claims 1 to 3, characterized in that spherical surfaces (17, 18) of the die elements (11, 12) are provided with an opening (15,16) for connection to a vacuum conduit.

5. Mould according to claims 1 to 4, characterized in that the spherical surface (17) of one die-element (11) has a different radius than the spherical surface (18) of the other die-element (12).

6. Mould according to claim 1 and one or more of the following claims, characterized in that the die-insert plugs (3, 4; 13, 14) are made of sapphire.

7. Mould according to claim 1 and one or more of the following claims, characterized by its application in injections-moulding units.

8. Mould according to claim 1 and one or more of the following claims, characterized by its application for the production of spectacle lenses.

9. Mould according to claim 1 and one or more of the following claims, characterized by its application for the production of spectacle lenses in injection-moulding units.

Fig.1

Fig.2